# EUROPÄISCHE PATENTSCHRIFT

(11) **EP 4 012 200 B1**
(45) Veröffentlichungstag und Bekanntmachung des Hinweises auf die Patenterteilung: **27.12.2023**
(21) Anmeldenummer: 21202818.7
(22) Anmeldetag: 15.10.2021
(51) Int. Cl.: F16B 19/10, F16B 19/02, F16B 21/18, F16B 39/10

(54) **FEDERBELASTETER RASTBOLZEN**
SPRING-LOADED DETENT BOLT
BOULON D'ENCLIQUETAGE SOLLICITÉ PAR RESSORT

(30) Priorität: 10.12.2020 DE 102020132928
(43) Veröffentlichungstag der Anmeldung: 15.06.2022
(73) Patentinhaber: Otto Ganter GmbH & Co. KG Normteilefabrik, 78120 Furtwangen (DE)
(72) Erfinder: BÄUERLE, Martin, 78141 Schönwald (DE)
(74) Vertreter: Riebling, Peter

(56) Entgegenhaltungen:
- EP-A1- 2 163 772
- EP-A1- 3 499 055
- EP-A1- 3 605 268
- EP-A2- 1 236 910
- DE-A1- 10 338 621
- US-A1- 2012 055 302

## Beschreibung

Gegenstand der Erfindung ist ein federbelasteter Rastbolzen nach dem Oberbegriff des Patentanspruches 1.

Ein solcher Rastbolzen ist beispielsweise aus der EP 3 605 268 A1 bekannnt.

Ein weiterer, bekannter Rastbolzen ist beispielsweise in der DE 10 2012 112 610 A1 offenbart und besteht aus einer Führungshülse und einem in der Führungshülse gelagerten Stellzapfen, der ein Verriegelungsende und ein Betätigungsende aufweist, wobei der Stellzapfen zwischen einer ersten axialen Endposition und einer zweiten axialen Endposition innerhalb der Führungshülse axial verschiebbar gelagert ist.

Dabei kann der Stellzapfen zumindest in einer axialen Endposition gegenüber der Führungshülse mit einem Rastmechanismus rastend oder mit Magnetelementen magnetisch haftend zeitweise oder dauerhaft festgelegt werden.

Weiterhin kann der Rastbolzen über eine selbsttätige Rückstellung verfügen und dadurch eine Grundstellung einnehmen.

Ob der Rastbolzen zur Betätigung bzw. zur Ver- oder Entriegelung durch Drücken oder Ziehen des Betätigungselements, beispielsweise einem Betätigungsknopf, bewegt wird, hängt vom Einbauort und der Funktionsweise des rückstellenden Elements, z. B. einer Druck- oder Zugfeder ab. Bevorzugt ist eine Axialdruckfeder vorgesehen, die den Stellzapfen des Rastbolzens in eine axiale Endposition drückt.

Die DE 295 19 311 U1 zeigt einen federbelasteten Rastbolzen, mit einer Führungshülse, die in eine zugeordnete Bohrung in ein Maschinen- oder Möbelteil eingeschraubt ist, und einem in der Führungshülse axial verschiebbar gelagerten Stellzapfen. Der Stellzapfen ist aus einer aus der Führungshülse axial vorstehenden Sperrstellung entgegen der Stellkraft einer Axialdruckfeder in eine zurückgezogene, nicht axial aus der Führungshülse vorstehende Neutralstellung verstellbar. Der Stellzapfen weist zudem ein Verriegelungsende und ein Betätigungsende in Verbindung mit einem Betätigungsknopf auf. Der Betätigungsknopf besitzt eine innere Hülse, mit welcher der Betätigungsknopf auf einem Hülsenabschnitt der Führungshülse positionsabhängig gelagert ist. Diese innere Hülse hat ein vertieft eingebrachtes Innensechskantprofil, in das die ein Außensechskantprofil aufweisende Führungshülse einfahren kann, wenn der Betätigungsknopf in gezogener Neutralstellung um 30° gedreht wird.

Erst nach einem erneuten Ziehen des Betätigungsknopfes wird die Führungshülse außer Eingriff mit der inneren Hülse gebracht und der Betätigungsknopf kann soweit gedreht werden, bis die beiden Sechskantprofile fluchten und der Stellzapfen in axialer Richtung in die Sperrstellung bringbar ist.

Nachteilig daran ist, dass nie genau bestimmt werden kann, in welcher Drehposition sich der um seine Längsachse drehbare Stellzapfen befindet. Dies ist jedoch bei der Verwendung eines Stellzapfens mit einer Auflaufschräge, am freien Ende des Stellzapfens, erforderlich, da die Ausrichtung der Auflaufschräge Einfluss auf die Fixierung eines Bauteils hat, in dessen Ausnehmung die Spitze des Stellzapfens in Eingriff bringbar ist oder welches von der Spitze hintergriffen ist. So kann in ausgewählten Richtungen ein selbsttätiges Ein- und/ oder Ausrasten ermöglicht werden, wohingegen andere Richtungen, in der sich Bauteil und Stellzapfen relativ zueinander bewegen, gesperrt sind. Allerdings ist eine solche Bedienung bei diesem Stand der Technik nicht möglich, weil eine richtungsabhängige Einstellung der Auflaufschräge des Stellzapfens fehlt.

Der Erfindung liegt deshalb die Aufgabe zugrunde, einen Rastbolzen der eingangs genannten Art so weiter zu bilden, dass unter Berücksichtig einer vereinfachten Ausgestaltung eine bestimmte Ausrichtung der Auflaufschräge möglich ist, damit der Rastbolzen fehlerfrei betätigt werden kann.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Vorteilhaftes Merkmal ist, dass der Betätigungsknopf erfindungsgemäß mindestens eine innerseitige Rastnase umfasst, die in eine korrespondierende Aussparung in der Seitenwand des Hülsenabschnitts der Führungshülse in der Sperrstellung rastend eingreift und den unter Federkraft eingerückten Betätigungsknopf gegenüber einer axialen Drehung um die Mittelachse des Rastbolzens drehfest fixiert und in der Neutralstellung die drehfeste, fixierte Position der Rastnase aufgehoben ist und der Betätigungsknopf um die Mittelachse drehbar ist.

Die Rastnase ist vorzugsweise am Innenumfang der Hülse angeordnet und erstreckt sich in radialer und axialer Richtung.

Die vorliegende Erfindung ist jedoch nicht auf diese Ausführungsform der Rastnase beschränkt. So werden auch beispielsweise gebogene oder eckige Rastnasen beansprucht. Gegenüber der Formgebung der Rastnase weist die Aussparung stet eine komplementäre Formgebung auf.

In einer vorteilhaften Ausführungsform ist die Rastnase in Neutralstellung und bei Drehung des Betätigungsknopfs nicht mehr in Eingriff mit der Aussparung und sitzt aufgrund der wirkenden Federkraft auf der Stirnseite des Hülsenabschnitts der Führungshülse auf und ist in mindestens zwei unterschiedliche Rastpositionen der Führungshülse bringbar. Somit kann eine Rastsperre geschaffen werden die dazu dient den Betätigungsknopf in einer bestimmten gedrehten Endposition zu fixieren. Durch die Auflage auf der Stirnseite ist auch keine Änderungen der Position des Stellzapfens in axialer Richtung mehr möglich.

Ein nach unten offener Aufnahmeraum im Inneren des Betätigungsknopfs dient zur Aufnahme des Hülsenabschnitts der Führungshülse, wenn der Rastbolzen in die Sperrstellung überführt wird.

Die Position des Betätigungsknopfes, bei der die Nase auf der Stirnseite des Hülsenabschnitts aufliegt, lässt sich erst durch eine Drehung des in Neutralstellung gezogenen Betätigungsknopfs erreichen.

In einer besonders vorteilhaften Weiterbildung dieser Ausführungsform weist die Stirnseite des Hülsenabschnitts mindestens eine Rastnut zur Aufnahme der Rastnase auf. Bevorzugt sind hierbei zwei Rastnuten, in welche die Rastnase bei einer Drehung des Betätigungsknopfes einfahren kann. So gelagert kann der Rastbolzen in der erreichten Endposition zeitweise oder dauerhaft verbleiben. Eine weitere Drehung oder ein Lösen der Rastnase aus einer Rastnut kann nur durch Kraftaufwand in Drehrichtung um die Mittelachse und/oder Ziehen des Betätigungsknopfs erreicht werden.

Wird die Rastnase soweit gedreht bis sie die Aussparung in der Wandung des Hülsenabschnitts erreicht, ist die Rastnase nicht mehr in Kontakt mit der Stirnseite des Hülsenabschnitts und der Betätigungsknopf hat keinen Halt mehr auf der Stirnseite. Die Rastnase ist nun in diesem, durch die Aussparung gebildeten, Freiraum aufgenommen und bewegt sich aufgrund der Rückstellkraft der Axialdruckfeder aus der Neutralstellung entlang des Hülsenabschnitts bis die vollständige Sperrstellung erreicht ist. Durch die Bewegung wird auch der Betätigungsknopf, in dem die Rastnase angeordnet ist, wieder in Richtung des Außensechskants bewegt.

In einer Weiterbildung dieser Ausführungsform kommt die Stirnfläche der knopfseitigen Hülse bei dieser Bewegung auf der Oberseite des Außensechskants zur Auflage, um eine weitere Bewegung in axialer Richtung zu blockieren. Die Auflage auf der Oberseite des Außensechskants bildet somit die Endposition der axialen Bewegung, bei der der Stellzapfen maximal aus der Führungshülse hervorsteht.

In einer weiteren vorteilhaften Weiterbildung weist der Stellzapfen am Verriegelungsende einen Sperrzapfen auf, an dessen Ende sich eine Auflaufschräge befindet sowie einen an den Sperrzapfen in Richtung des Betätigungsende anschließenden und im Durchmesser radial verringerten Führungsabschnitt, der zumindest abschnittsweise von der Axialdruckfeder umgeben ist und in das Betätigungsende mündet, welches mit dem Betätigungsknopf axial feststehend in Eingriff bringbar ist.

Eine bevorzugte Weiterbildung des Rastbolzens ist dadurch gekennzeichnet, dass die Führungshülse eine axiale Führungsbohrung aufweist, durch die der Stellzapfen geführt ist und die in Richtung des Verriegelungsende offen ist und in Richtung des Betätigungsende einen Bohrungsabschnitt aufweist, der die Führungsbohrung radial verengt, und dass sich die Führungsbohrung oberhalb des Bohrungsabschnitts wieder radial vergrößert und einen Innenraum innerhalb des Hülsenabschnitts bildet, der in Richtung des Betätigungsendes offen ist.

Die Axialdruckfeder ist zwischen einer, gegenüber dem Führungsabschnitt radial vergrößerten Ringschulter des Sperrzapfens und einem Anschlagsteg, zu Beginn des Bohrungsabschnitts der Führungshülse, eigenspannt.

In einer bevorzugten Weiterbildung weist der Betätigungsknopf in radialen Abstand zur äußeren Hülse eine innenliegende, sich in axialer Richtung erstreckende, Montagehülse auf, in der das Betätigungsende des Stellzapfens mindestens teilweise aufgenommen ist.

In einer besonders vorteilhaften Weiterbildung dieser Ausführungsform weist das Betätigungsende des Stellzapfens eine Profilierung zur drehfesten und kraftschlüssigen Verbindung mit der Montagehülse auf.

In einer besonders vorteilhaften Weiterbildung weist die Montagehülse ein zu dem Außenprofil des Betätigungsendes korrespondierendes Innenprofil auf.

In einer weiteren vorteilhaften Weiterbildung dieser Ausführungsform weist die Seitenwand der Montagehülse in Axialrichtung verlaufende Schlitze auf, die elastisch aufweitbar sind, um eine feste Aufnahme des Betätigungsendes im Inneren der Montagehülse zu gewährleisten.

In einer bevorzugten Weiterbildung schließt sich an die Montagehülse eine durch den Kopf des Betätigungsknopfes verlaufende Durchführung an, durch die eine Schraube geführt ist, die in ein in Längsrichtung des Betätigungsendes eingebrachtes Gewinde, zur axialen Verstellung des federvorgespannten Stellzapfens, eingreift.

Damit ist ein Einstellen der Axialposition des Arretierstifts in der maximal ausgerückten Stellung, bei gleichbleibender rotatorischer Ausrichtung der Spitze, relativ zur Führungshülse möglich. Betätigt man die Schraube im Uhrzeigersinn, schraubt sich diese tiefer in das Gewinde im Betätigungsende. Da der Schraubenkopf gegenüber einer axialen Bewegung in der Durchführung Lagegesichert ist, verursacht der Gewindeeingriff eine Zugbewegung und der Stellzapfen wird in Richtung des Betätigungskopfs bewegt. Das Verriegelungsende wird somit in die Führungshülse eingezogen.

Betätigt man die Schraube entgegen dem Uhrzeigersinn, wird der Stellzapfen von dem Betätigungsknopf wegbewegt und das Verriegelungsende wandert weiter aus der nach unten offenen Führungshülse heraus.

In einer bevorzugten Weiterbildung eines Rastbolzens bildet der gegenüber der Führungsbohrung radial verringerte Bohrungsabschnitt einen weiteren Anschlagsteg in Richtung des Betätigungsendes, auf dem ein in einer Ringnut des Führungsabschnitts des Sperrzapfens mindestens teilweise eingebrachter Sprengring, bei Entkopplung des Gewindes von der Schraube und axialer Bewegung des Stellzapfens, aufliegt.

Bei dem erfindungsgemäßen Rastbolzens ist die Führungshülse mindestens zweigeteilt und besteht aus einer Steckhülse sowie einer auf der Steckhülse aufsteckbaren und drehbaren Aufnahmehülse.

In einer besonders vorteilhaften Weiterbildung dieser Ausführungsform weist die Steckhülse eine Ringnut auf, in die eine von der Aufnahmehülse nach Innen ragende Madenschraube eingreift, die beiden Hülsen gegeneinander lagesichert. Löst man die Madenschraube kann man die Aufnahmehülse relativ zur Steckhülse verdrehen. Da die Aufnahmehülse, ebenso wie bei der ersten Ausführungsform, eine Aussparung für die Aufnahme und Führung des Rastzahns des Betätigungsknopfs aufweist, kann durch eine Drehung der Aufnahmehülse auch die Drehlage geändert werden, bei der die Betätigungshülse mit dem Rastzahn in die Aussparung eingreift. Da bei der zweiten Ausführungsform die Betätigungshülse drehfest mit der Stellzapfen verbunden ist, kann somit auch die Ausrichtung der am Ende des Stellzapfens vorhandenen Auflaufschräge eingestellt werden.

Somit kann die Ausrichtung der Auflaufschräge durch ein Lösen der Madenschrauben und verdrehen der Aufnahmehülse eingestellt werden, ohne den Rastbolzen zu ziehen oder auseinander zu bauen. Eine Ausrichtung der Auflaufschräge ist somit in Sperrstellung des Rastbolzens, d.h. wenn der Stellzapfen komplette aus der Führungshülse herausragt, möglich.

Auch andere Formen einer Verdrehsicherung als Sicherungselement werden mit der vorliegenden Erfindung beansprucht, wie beispielsweise ein Stellring, ein Sicherungsring, eine Sicherungsscheibe, Splinte oder Achshalter, welche zur Sicherung der Bauteile gegen axiales Verschieben oder Verdrehen dienen. Diese Sicherung kann form- oder kraftschlüssig erfolgen.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Im Folgenden wird die Neuerung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Neuerung hervor.

### Es zeigen:

- Figur 1:: ein Schnitt einer ersten Ausführungsform eines Rastbolzens nicht gemäß der vorliegenden Erfindung. Schnitt I-I gemäß Figur 3;
- Figur 2:: eine Seitenansicht der in 1 veranschaulichten ersten Ausführungsform;
- Figur 3:: eine gegenüber 2 gedrehte Seitenansicht;
- Figur 4:: eine Perspektivansicht der ersten Ausführungsform;
- Figur 5:: ein Schnitt der Führungshülse;
- Figur 6:: eine Perspektivansicht der Führungshülse;
- Figur 7;: ein Schnitt des Betätigungsknopfs;
- Figur 8:: eine Unteransicht auf den Betätigungsknopf;
- Figur 9:: eine Seitenansicht des Stellzapfens;
- Figur 10:: ein Schnitt des in 9 gezeigten Stellzapfens;
- Figur 11:: eine Explosionsansicht einer zweiten Ausführungsform eines Rastbolzens gemäß der vorliegenden Erfindung;
- Figur 12:: ein Schnitt der zweiten Ausführungsform eines Rastbolzens gemäß der vorliegenden Erfindung;
- Figur 13:: eine Seitenansicht der in 12 veranschaulichten zweiten Ausführungsform des Rastbolzens im gezogenen Zustand;

- Figur 14:: eine Seitenansicht der in 12 und 13 veranschaulichten zweiten Ausführungsform eines Rastbolzens;
- Figur 15:: eine perspektivische Ansicht eines Rastbolzens mit teilweise geschnittenen Betätigungskopf nach einer dritten Ausführungsform;
- Figur 16:: eine perspektivische Ansicht eines Rastbolzens mit teilweise geschnittenen Betätigungskopf nach einer vierten Ausführungsform;
- Figur 17:: eine perspektivische Ansicht eines Betätigungskopfs nach einer fünften Ausführungsform;
- Figur 18:: eine perspektivische Ansicht eines Rastbolzens mit teilweise geschnittenen Betätigungskopf nach einer sechsten Ausführungsform;
- Figur 19:: eine perspektivische Ansicht eines Rastbolzens mit te Betätigungskopf nach einer siebten Ausführungsform;

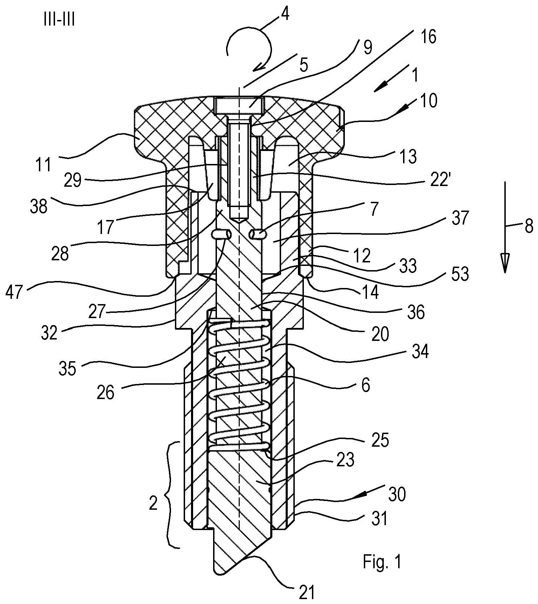

Figur 1 zeigt eine Schnittdarstellung der einzelnen Bauelemente eines nicht erfindungsgemäßen Rastbolzens 1. Dieser Rastbolzen 1 besteht aus einer Führungshülse 30, welche in Figur 1 im vertikalen Schnitt dargestellt ist. Die Führungshülse 30 weist in ihrem unteren Betätigungsende ein Außengewinde 31 auf, mit welchem die Führungshülse 30 in ein Maschinenbauteil oder dergleichen einschraubbar ist. Anstatt eines Außengewindes kann in diesem Betätigungsende der Führungshülse 30 auch ein anderes, aus dem Stand der Technik bekanntes Befestigungsmittel, wie eine Anschraubplatte, eine Anschweißplatte oder dgl. vorgesehen sein. Auf dieses Außengewinde 31 kann eine Kontermutter aufgeschraubt sein, welche in Figur 1 nicht dargestellt ist.

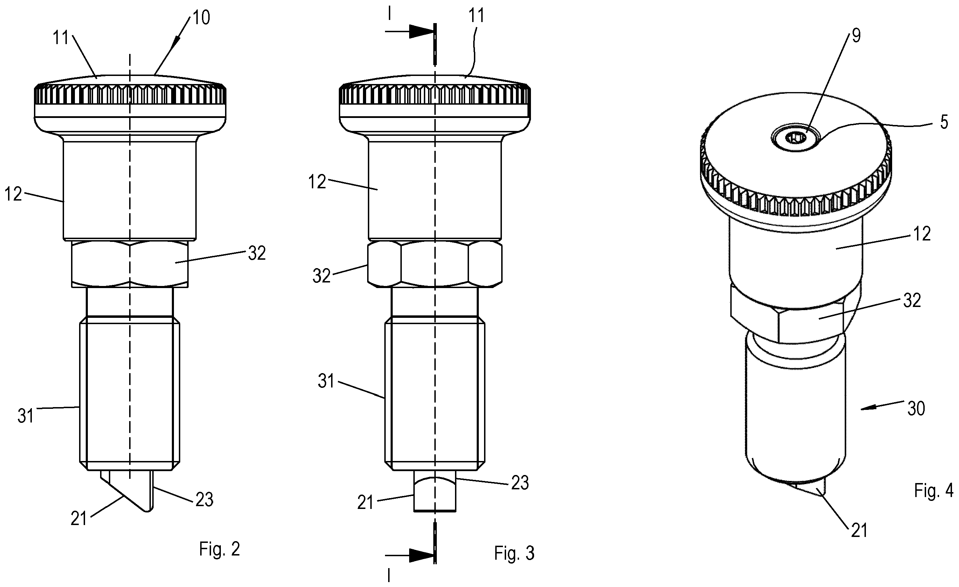

Oberhalb des Außengewindes 31 schließt sich, etwa im mittleren Bereich der Führungshülse 30, ein Außensechskant 32 an, über welchen die Führungshülse 30 in das Maschinenbauteil oder dergleichen eingeschraubt werden kann. Dieser Außensechskant ist beispielsweise in den Figuren 2-4 zu sehen.

Nach oben hin schließt sich an diesen Außensechskant 32 ein Hülsenabschnitt 33 an, welcher einen Hohlzylinder bildet. Etwa im axialen Bereich des Außensechskantes 32 sowie des Außengewindes 31 weist die Führungshülse 30 eine abgestufte Führungsbohrung 34 auf, welche etwa im Bereich des Außensechskantes 32 einen radial nach innen abgesetzten Anschlagsteg 35 bildet.

An diesen Anschlag 35 schließt sich zum Hülsenabschnitt 33 hin ein radial verjüngter Bohrungsabschnitt 36 an, welcher in einen radial erweiterten Innenraum 37 des Hülsenabschnittes 33 mündet.

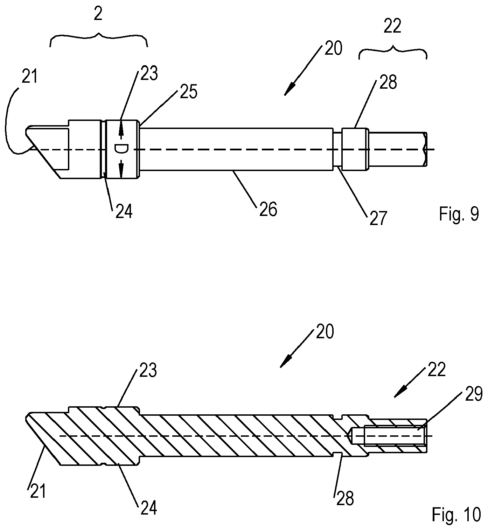

Durch den Innenraum 37, dem Bohrungsabschnitt 36 und der Führungsbohrung 34 ist ein Stellzapfen 20 eingesetzt, welcher in seinem unteren Betätigungsende 22 einen radial erweiterten Sperrzapfen 23 bildet, wie dies aus Figur 1 erkennbar ist. Dieser Sperrzapfen 23 weist einen Außendurchmesser D auf, welcher dem Innendurchmesser d des Bohrungsabschnitts 36, insbesondere im axialen Bereich des Außengewindes 31 entspricht, wie dies aus Figur 9 zu entnehmen ist.

An diesen Sperrzapfen 23 schließt sich nach oben hin ein Führungsabschnitt 26 an, der im Durchmesser verringert durch den gegenüber der Führungsbohrung 34 radial verjüngten Bohrungsabschnitt 36 durchragt und sich bis in den sich wieder radial erweiterten Innenraum 37 erstreckt. Am Ende des Führungsabschnittes 26, d.h. an den dem Sperrzapfen 23 gegenüberliegendem Abschnitt, bildet der Stellzapfen 20 einen Betätigungsende 22, auf dem der Betätigungsknopf 10 montierbar ist.

Wie aus Figur 9 ersichtlich ist, weist das Betätigungsende 22 eine sechseckige Außenkontur auf, mit welcher das Betätigungsende 22 mit dem Betätigungsknopf 10 axial feststehend in Eingriff bringbar ist.

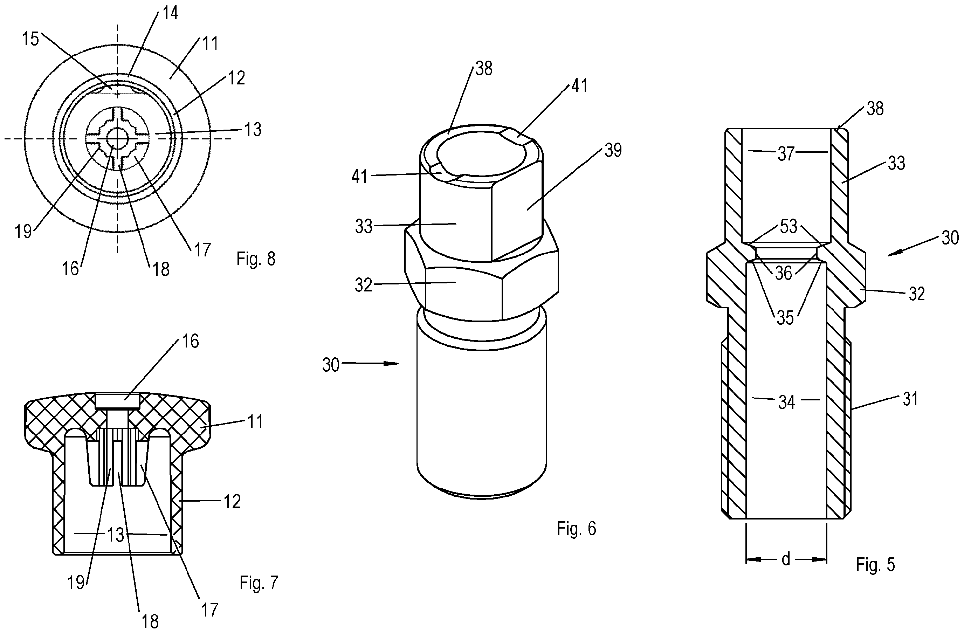

Hierzu weist der Betätigungsknopf 10 eine innere Montagehülse 17 auf, welche zur Aufnahme des Betätigungsendes 22 ein entsprechend im Durchmesser angepasstes Innenprofil 19 bildet, von welchem in Figur 1 nur der Querschnitt erkennbar ist, dies aber aus Figur 8 deutlich zu entnehmen ist. Dieses Innenprofil 19 ist im Durchmesser derart ausgebildet, dass das Betätigungsende 22 des Stellzapfens 20, nach dem Einsetzen in die Montagehülse 17, sowohl eine Kraftschluss- als auch eine Formschlussverbindung bildet, so dass nach dem Aufsetzen des Betätigungsknopfes 10 auf den Stellzapfen 20 eine axial feststehende Verbindung entsteht.

Das Betätigungsende 22 des Stellzapfens 20, welches in die sich radial verjüngt ausgebildete Montagehülse 17 eingesetzt ist, ist durch die Schraube 9, welche in das Gewinde 29 des Betätigungsende 22 eingeschraubt ist, axial feststehend fixiert ist.

Die Schraube 9 ist mittig der Oberseite des Betätigungsknopfes 10 in eine Durchführung 16 passend eingesetzt und hier durch einen kreisförmigen Auflagesteg gegenüber einer axialen Bewegung in Pfeilrichtung 8 lagegesichert.

Eine Axialdruckfeder 6 ist auf den Führungsabschnitt 26 des Stellzapfens 20 aufsetzbar und befindet sich zusammen mit dem unteren Sperrzapfen 23 innerhalb des radial erweiterten Bereiches der Führungsbohrung 34. Mittels dieser Axialdruckfeder 6 wird der Stellzapfen 20 in seiner Sperrposition gehalten, in welcher der Sperrzapfen 23 axial nach unten aus der Führungshülse 30 vorsteht und eine Anlaufschräge 21 aufweist. Die Stellfeder 6 ist unter axialer Vorspannung angeordnet und zwischen Ringschulter 25 und Anschlagsteg 35 eingespannt.

Aufgrund der Sperrwirkung der Rastnase 15 mit der Rastnut 41 ist diese axiale Position des Stellzapfens 20 innerhalb er Führungshülse 33 fixiert.

Des Weiteren ist aus den Figuren 1, 7 und 8 erkennbar, dass die radial äußere Hülse 12 und die Montagehülse 17 einen radialen Abstand voneinander aufweisen, so dass im montierten Zustand der obere Hülsenabschnitt 33 der Führungshülse 30 zwischen der Hülse 12 und der Montagehülse 17 einschiebbar ist. Somit wird zwischen der äußeren Hülse 12 und der Montagehülse 17 ein Aufnahmeraum 13 gebildet, wie dies insbesondere auch aus der Schnittdarstellung der Figur 7 erkennbar ist.

Gemäß den Figuren 1-4 befindet sich der Rastbolzen 1 in seiner Sperrstellung, in welcher der Sperrzapfen 23 die Führungshülse 30 durchragt und nach unten hin aus dieser hervorsteht.

Gleichzeitig stützt sich die Stirnfläche 14 der Hülse des Betätigungsknopfs 10 am Anschlagsteg 47 oberhalb des Außensechskants 32 axial ab.

Die Figur 8 zeigt den Betätigungsknopf 10 mit der Rastnase 15, welche in den Rastnuten 41 (Figur 6) einfahren und einrasten kann. Aufgrund der Sperrwirkung der Rastnase 15 mit einer Rastnut 41 kann die gedrehte Position des Betätigungsknopfes 10 sowie die diese axiale Position des Stellzapfens 20 innerhalb er Führungshülse 30 fixiert werden.

Wird nun der Betätigungsknopf 10 zusammen mit dem damit verschraubten Stellzapfen 20 entgegen der Pfeilrichtung 8 gezogen, so kommt die Rastnase 15 außer Eingriff mit der Rastnut 41 und kann bei Drehung des Betätigungsknopfes 10 in Pfeilrichtung 4 entlang der Stirnseite 38 des Hülsenabschnitts 33 gleiten, bis die Rastnase in den Bereich oberhalb der Aussparung 39 gelangt. Nun ist die Rastnase 15 nicht mehr in Kontakt mit der Stirnseite 38 und der Betätigungskopf 10 kann wieder in Richtung des Anschlagstegs 47 in Pfeilrichtung 8 bewegt werden. Diese Bewegung wird unterstützt durch die Rückstellkraft der Axialdruckfeder 6.

Die Begrenzung des vertikalen Stellweges des Stellzapfens 20 in Richtung des Pfeiles 8 kann durch die Schraube 9 eingestellt werden. Um nun den Betätigungsknopf 10 zusammen mit dem Stellzapfen 20 wieder in die in Figur 1 dargestellte Sperrposition bringen zu können, ist zunächst der Betätigungsknopf 10 entgegen der Pfeilrichtung 4 relativ zur Führungshülse 30 zu verdrehen, bis die Rastnase 15 wieder in den Bereich der Aussparung 39 gelangt.

In Figur 5 ist die Führungshülse 30 erkennbar, welche beim vorliegenden Ausführungsbeispiel die Führungsbohrung 34 aufweist. Diese Führungsbohrung 34 weist einen radial innen nach vorstehenden axialen, umlaufenden Anschlagsteg 35 auf, an welchem sich im montierten Zustand die Axialdruckfeder 6 axial abstützt.

Figur 7 zeigt die radial innenliegende Montagehülse 17, die das Betätigungsende 22 des Stellzapfens 20 im eingebauten Zustand umlaufend umschließt.

Figur 7 zeigt zudem die geschnittene Darstellung des Betätigungsknopfs 10, der pilzförmig aus einem oberen Kopf 11 und einer sich daran in axialer Richtung anschließenden Hülse 12 besteht. Die hohle Hülse 12 umschließt den Aufnahmeraum 13, in dem der Hülsenabschnitt 33 Aufnahme findet.

Ausgehend von der Unterseite des Kopfes 11 ragt die Montagehülse 17 in den Aufnahmeraum 13. Die Montagehülse 17 weist randseitige Schlitze 18 auf, die sich in axialer Richtung erstrecken und eine elastische Aufweitung der Montagehülse bei Einführung des Betätigungsendes 22 zu ermöglichen. Im Inneren der Montagehülse 17 weist diese ein Innenprofil auf, welches an das Profil des Betätigungsendes 22 angepasst ist.

Figur 9 zeigt den Stellzapfen 20 in Seitenansicht, welcher in seinem unteren Verriegelungsende (links) einen radial erweiterten Sperrzapfen 23 bildet. Am Ende des Sperrzapfen 23 und somit am Ende des Stellzapfens ist eine bezüglich der Mittelachse nicht rotationssymmetrische und nicht drehsymmetrische Spitze, welche die Auflaufschräge 21 bildet. An den Sperrzapfen 23 schließt sich nach rechts oben hin ein Führungsabschnitt 26 an, der gegenüber den Sperrzapfen im Durchmesser verringert ist. Am Ende des Führungsabschnittes 26, d.h. an dem dem Sperrzapfen 23 gegenüber liegenden Abschnitt, weist der Stellzapfen 20 ein Betätigungsende 22 auf, auf den der Betätigungsknopf 10 montierbar ist. Dieses Betätigungsende 22 weist eine sechseckige Außenkontur auf, mit welcher das Betätigungsende 22 mit dem Betätigungsknopf 10 axial feststehend in Eingriff bringbar ist.

Der Sperrzapfen 23 weist an seinem Außenumfang eine radial nach außen hin offene Nut auf, die die Markierung 24 bildet. Bei einer, unterhalb der Führungshülse 30, sichtbaren Markierung 24 ist für das Bedienungspersonal erkennbar, dass sich der gesamte Stellzapfen 20 mit seinem Sperrzapfen 23 in einer Raststellung befindet, in welcher der Sperrzapfen 23 maximal aus der Führungshülse 30 vorsteht.

Am Ende des Führungsabschnitts 26, kurz vor Beginn des Betätigungsendes 22, weist der Führungsabschnitt 26 an seinem Außenumfang eine radial nach außen hin offene Ringnut 27 auf, die zur Aufnahme des Sprengrings 7 dient. Dieser Sprengring 7 ist in Figur 1 zu sehen und dient zur Begrenzung der axialen Bewegung des Stellzapfens 20. Sobald der Sprengring 7 bei einer Bewegung des Stellzapfens 20 in Pfeilrichtung 8 in Kontakt mit dem Anschlagsteg 53 kommt, verhindert dies eine weitere Bewegung des Stellzapfens in Pfeilrichtung 8. Somit ist es beispielsweise möglich, bei einer kompletten Lösung der Schraube 9 aus dem Gewinde 29 den bedingt durch die Federkraft der Axialdruckfeder 6 nach unten gedrückte Stellzapfen 20 an einem Hinausfallen aus der Führungshülse 30 zu hindern. Der Stellzapfen wird dann vielmehr von dem Sprengring 7 im Inneren der Führungshülse gehalten.

Figur 10 zeigt die geschnittene Darstellung von Figur 9, wobei das in dem Betätigungsende 22 eingebrachte Gewinde 29, zur Aufnahme der Schraube 9, zu sehen ist.

Durch diese Ausgestaltung wird somit einerseits die nach unten aus der Führungshülse 30 vorstehende relative Position des Sperrzapfens 23 gegenüber dem Betätigungsknopf 10 und andererseits gleichzeitig die zurückgezogene Neutralstellung des Betätigungsknopfs 10 und damit des Stellzapfens 20 in der Führungshülse 30 durch die Schraube 9 definiert.

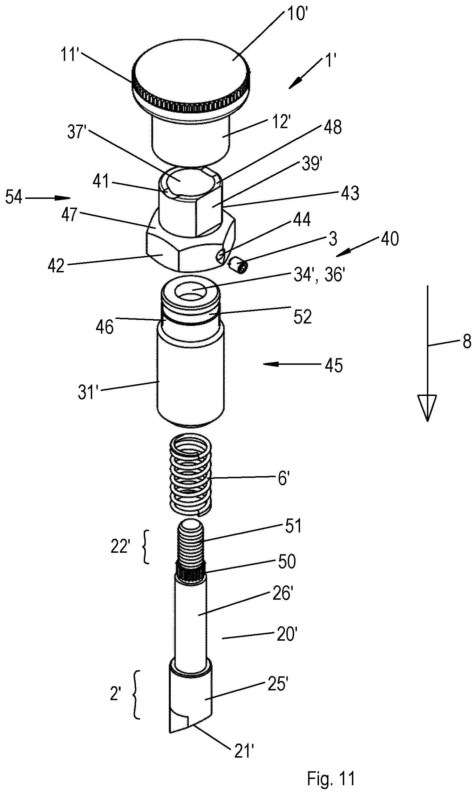

Figur 11 zeigt eine zweite und erfindungsgemäße Ausführungsform des Rastbolzens 1', wobei gegenüber der ersten Ausführungsform die gleichen Teile mit den gleichen Bezugszeichen und einem "'" versehen sind. Die Steckhülse 45 weist eine Ringnut 52 auf, in die eine von der Aufnahmehülse 54 nach innen ragende Madenschraube 3 eingreift, die beide Hülsen gegeneinander lagesichert. Die Madenschraube 3 ist in das Gewinde 44 der Aufnahmehülse 54 eingeschraubt.

Löst man die Madenschraube 3, kann man die Aufnahmehülse 54 relativ zur Steckhülse 45 verdrehen. Da die Aufnahmehülse 54, ebenso wie bei der ersten Ausführungsform, eine Aussparung 39` für die Aufnahme und Führung des Rastzahns des Betätigungsknopfs 10` aufweist, kann durch eine Drehung der Aufnahmehülse 54 auch die Drehlage geändert werden, bei der die Betätigungshülse 10` mit dem Rastzahn in die Aussparung 39` eingreift.

Da bei der zweiten Ausführungsform die Betätigungshülse 10` drehfest mit dem Stellzapfen 20' verbunden ist, kann somit auch die Ausrichtung der am Ende des Stellzapfens 20' vorhandenen Auflaufschräge 21' eingestellt werden.

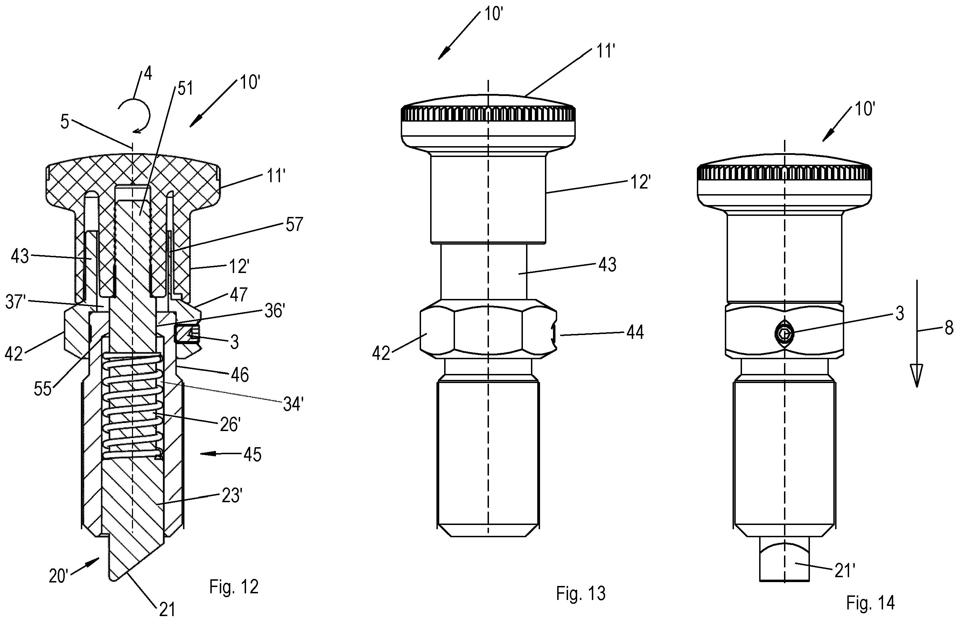

Figur 12 zeigt eine Schnittdarstellung der einzelnen Bauelemente eines erfindungsgemäßen Rastbolzens 1 gemäß der zweiten Ausführungsform. Dieser Rastbolzen 1 besteht aus der Führungshülse 40, welche in Figur 12 im vertikalen Schnitt dargestellt ist. Die Führungshülse 40 weist in ihrem unteren Betätigungsende ein Außengewinde auf, mit welchem die Führungshülse in ein Maschinenbauteil oder dergleichen einschraubbar ist. Anstatt eines Außengewindes kann in diesem Betätigungsende der Führungshülse 40 auch ein anderes, aus dem Stand der Technik bekanntes Befestigungsmittel, wie eine Anschraubplatte, eine Anschweißplatte oder dgl. vorgesehen sein. Auf dieses Außengewinde kann eine Kontermutter aufgeschraubt sein, welche in Figur 12 nicht dargestellt ist.

Oberhalb des Außengewindes schließt sich, etwa im mittleren Bereich der Führungshülse 40, ein Außensechskant 42 an, über welchen die Führungshülse 40 feststehend in das Maschinenbauteil oder dergleichen eingeschraubt werden kann. Dieser Außensechskant ist ebenfalls in den Figuren 13 und 14 zu sehen.

Ebenfalls ist ein Sechskant oberhalb des Gewindes der Führungshülse 40 vorstellen möglich, mit dem unabhängig die Führungshülse in das Maschinenbauteil eingeschraubt werden kann.

Nach oben hin schließt sich an diesen Außensechskant 42 ein Hülsenabschnitt 43 an, welcher einen Hohlzylinder bildet. Etwa im axialen Bereich des Außensechskantes 42 sowie des Außengewindes weist die Führungshülse 40 eine abgestufte Führungsbohrung 34' auf, welche etwa im Bereich des Außensechskantes 42 einen radial nach innen abgesetzten Anschlagsteg 55 bildet. An diesen Anschlagsteg 55 schließt sich zum Hülsenabschnitt 43 hin ein radial verjüngter Bohrungsabschnitt 36` an, welcher in einen radial erweiterten Innenraum 37` des Hülsenabschnittes 43 mündet.

Durch den Innenraum 37`, dem Bohrungsabschnitt 36` und der Führungsbohrung 34` ist ein Stellzapfen 20' eingesetzt, welcher in seinem einen unteren Betätigungsende einen radial erweiterten Sperrzapfen 23' bildet. Dieser Sperrzapfen 23' weist einen Außendurchmesser auf, welcher dem Innendurchmesser des Bohrungsabschnitts 36` entspricht.

An diesen Sperrzapfen 23' schließt sich nach oben hin ein Führungsabschnitt 26' an, der im Durchmesser verringert durch den gegenüber der Führungsbohrung 34' radial verjüngten Bohrungsabschnitt 36` durchragt und sich bis in den sich wieder radial erweiterten Innenraum 37` erstreckt. Am Ende des Führungsabschnittes 26`, d.h. an den dem Sperrzapfen 23' gegenüber liegendem Abschnitt, bildet der Stellzapfen 20' ein Betätigungsende 22', auf den der Betätigungsknopf 10` montierbar ist.

Wie aus Figur 11 ersichtlich ist, weist dieses Betätigungsende 22' eine profilierte Außenkontur auf, nämlich eine Rändelung 50 sowie eine Verzahnung 51, mit welcher das Betätigungsende 22' mit dem Betätigungsknopf 10' axial feststehend in Eingriff bringbar ist.

Hierzu weist der Betätigungsknopf 10' eine innere Montagehülse 57 auf, welche zur Aufnahme des Betätigungsendes 22`entsprechend angepasst ist. Die Innenseite der Montaghülse 57 ist derart ausgebildet, dass das Betätigungsende 22' des Stellzapfens 20` nach dem Einsetzen in die Montagehülse 57 sowohl eine Kraftschluss- als auch eine Formschlussverbindung bildet, so dass nach dem Aufsetzen des Betätigungsknopfes 10' auf den Stellzapfen 20' eine axial feststehende Verbindung entsteht.

Eine Axialdruckfeder 6' ist auf den Führungsabschnitt 26' des Stellzapfens 20' aufsetzbar und befindet sich zusammen mit dem unteren Sperrzapfen 23' innerhalb des radial erweiterten Bereiches der Führungsbohrung 34'. Mittels dieser Axialdruckfeder 6` wird der Stellzapfen 20' in seiner Sperrposition gehalten, in welcher der Sperrzapfen 23' axial nach unten aus der Führungshülse 40 vorsteht und eine Anlaufschräge 21' aufweist.

In Figur 12 ist zudem die Führungshülse 40 erkennbar, welche die Führungsbohrung 34 aufweist. Diese Führungsbohrung 34' weist einen radial innen nach vorstehenden axialen, umlaufenden Anschlagsteg 55 auf, an welchem sich im montierten Zustand die Axialdruckfeder 6' axial abstützt.

Des Weiteren ist aus Figur 12 erkennbar, dass die radial äußere Hülse 12' und die Montagehülse 57 einen radialen Abstand voneinander aufweisen, so dass im montierten Zustand der obere Hülsenabschnitt 43 der Führungshülse 40 zwischen der Hülse 12' und der Montagehülse 57 einschiebbar ist. Somit wird zwischen der äußeren Hülse 12' und der Montagehülse 57 ein Aufnahmeraum gebildet.

Gemäß Figur 12 befindet sich der Rastbolzen 1' in seiner Sperrstellung, in welcher der Sperrzapfen 23' die Führungshülse 40 durchragt und nach unten hin aus dieser Führungshülse 40 vorsteht.

Gleichzeitig stützt sich die Stirnfläche der Hülse 12' am Anschlagsteg oberhalb des Außensechskants 42 axial ab.

Figur 13 zeigt die gezogene Stellung des Betätigungsknopfs 10`, d.h. die Neutralstellung des Rastbolzens. Wird nun der Betätigungsknopf 10' zusammen mit dem damit verschraubten Stellzapfen 20' entgegen der Pfeilrichtung 8 gezogen, so kommt die Rastnase außer Eingriff mit der Aussparung 39` (s.h. Figur 11) und kann bei Drehung des Betätigungsknopfs in Pfeilrichtung 8 innenseitig entlang der Stirnseite 48 gleiten, bis die Rastnase in den Bereich der Rastnut 41 gelangt und sich der Betätigungsknopf 10` wieder in Pfeilrichtung 8 bewegt.

Um nun den Betätigungsknopf 10` zusammen mit dem Stellzapfen 20' wieder in die in Figur 14 dargestellte Sperrposition bringen zu können, ist zunächst der Betätigungsknopf 10` entgegen der Pfeilrichtung 8 relativ zur Führungshülse 40 zu verstellen, bis dieser insbesondere mit der Rastnase wieder in den aufgrund der Aussparung 39 bedingten Freiraum gelangt.

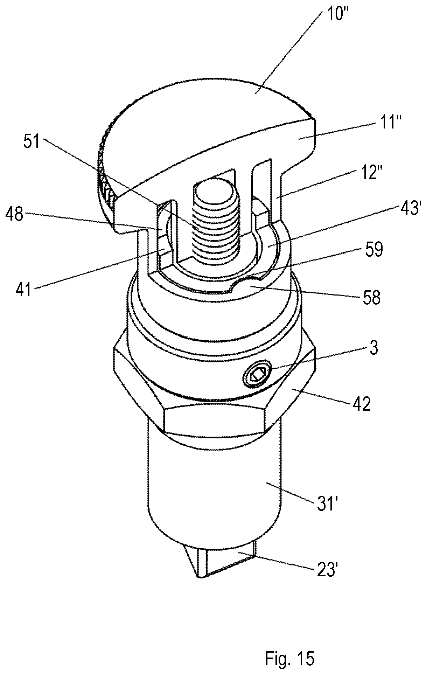

Figur 15 zeigt ein weiteres erfindungsgemäßes Ausführungsbeispiel des Rastbolzens, wobei der Hülsenabschnitt 43' eine in Längsrichtung im Außenumfang eingebrachte, annähernd halbreisförmige und radial nach außen hin offene Aussparung 59 aufweist. Im Inneren der Hülse 12" ist eine in die Aussparung 59 eingreifende Rastnase 58 angebracht, die eine zur Aussparung 59 komplementäre Form aufweist. Im Beispiel nach Figur 15 hat die die Rastnase 58 eine Kreisbogenform und ist in die zugeordnete Aussparung 59 eingefahren.

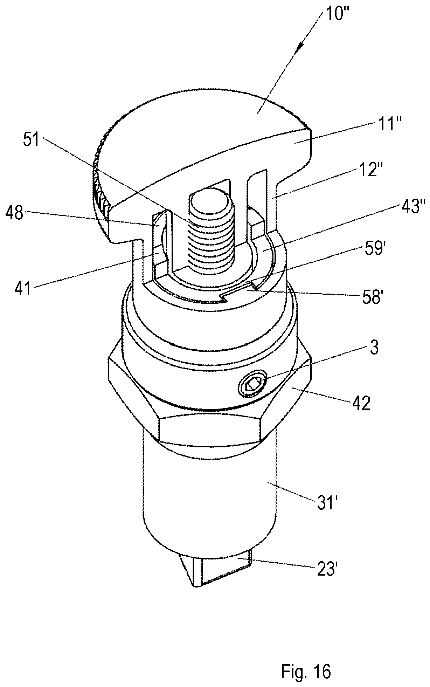

Figur 16 zeigt ein weiteres erfindungsgemäßes Ausführungsbeispiel des Rastbolzens, wobei der Hülsenabschnitt 43" eine in Längsrichtung in der Außenwandung eingebrachte, annähernd rechteckige und radial nach außen hin offene Aussparung 59' aufweist. Im Inneren der Hülse 12" ist eine in die Aussparung 59' eingreifende Rastnase 58' angebracht, die eine zur Aussparung 59' komplementäre Form aufweist. Im Beispiel nach Figur 16 hat die Rastnase 58 eine Rechteckform und ist in die zugeordnete Aussparung 59' eingefahren.

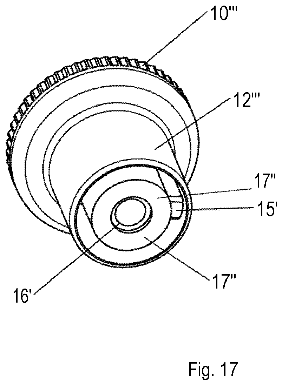

Figur 17 zeigt ein weiteres Ausführungsbeispiel eines Betätigungsknopfs 10‴, wobei der Betätigungsknopf 10‴ sich durch eine Rastnase 15' auszeichnet, die in eine Aussparunge in einem nicht gezeigten Hülsenabschnitt eingreift. Die Rastnase 15' ersteckt sich in radialer Richtung zwischen der Innenfläche der Hülse 12‴ und der Montagehülse 17". Die dazu komplementäre Aussparung des Hülsenabschnitts wird durch den den zylindrischen Hülsenabschnitt in Längsrichtung durchdringende n Schlitz gebildet.

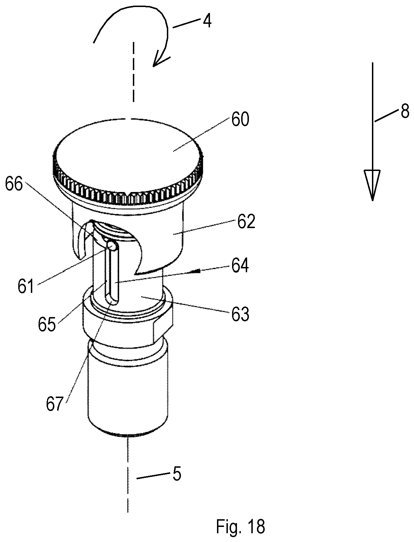

Figur 18 zeigt ein weiteres Ausführungsbeispiel eines Betätigungsknopfs 60, bei dem sich die Rastnase 61 in radialer Richtung zwischen der Innenfläche der Hülse 62 und der Montagehülse erstreckt. Aus Vereinfachungsgründen wurde in der Zeichnung ein kreisförmiger Schnitt in der Mantelfläche der Hülse 62 gezeichnet, um die Rastnase 61 sichtbar zu machen. Die Rastnase 61 ist stiftförmig ausgebildet und greift in eine Aussparung, gebildet durch eine Kulissenführung 63 in dem Hülsenabschnitt 63, ein. Die Kulissenführung 64 setzt sich aus einer in Längsrichtung verlaufenden Kulisse 65 und einer oberhalb, in Richtung des Kopfes des Betätigungsknopfes 60, anschließend Kulisse 66 zusammen, wobei die Kulisse 66 gegenüber der Kulisse 65 um etwa 90° versetzt in dem Hülsenabschnitt 63 eingebracht ist. Bei einem Eingriff der Rastnase 61 in die Kulisse 66 lässt sich der Betätigung 60 nur um die Mittelachse 5 drehen. Erreicht nun die Rastnase 61 die Kulisse 65, fährt die Rastnase 61 in die Kulisse 65 in Pfeilrichtung 8 ein und ermöglicht somit eine Bewegung des Betätigungskopfs 60 entlang der Mittelachse 5. Eine Drehung ist so nicht mehr möglich. Durch die Bewegung der Rastnase 61 innerhalb der Kulisse 65 wird somit direkt Einfluss genommen auf die Verstellposition des nicht gezeigten Stellzapfens. So bestimmt die in die Kulisse 66 eingefahrene Rastnase 61 die Neutralstellung des Rastbolzens und erst wenn die Rastnase 61 die komplette Kulisse 65 in Pfeilrichtung 8 durchlaufen hat und den Endbereich 67 der Kulisse 65 erreicht hat, befindet sich der Stellzapfens in Sperrstellung.

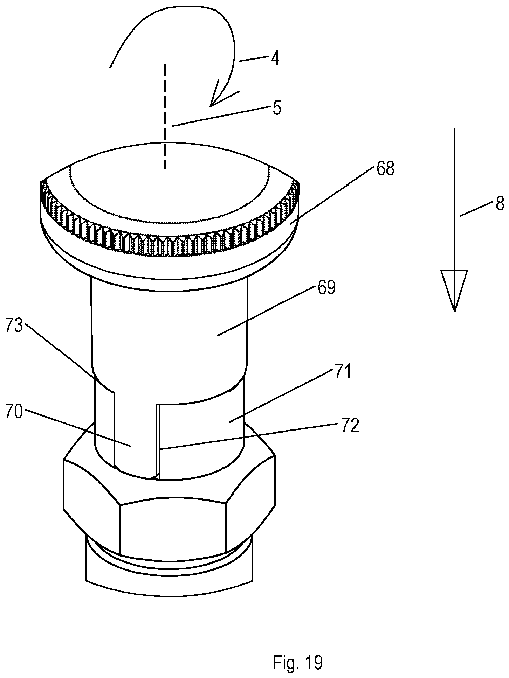

Figur 19 zeigt ein weiteres erfindungsgemäßes Ausführungsbeispiel eines Rastbolzens, wobei der Betätigungsknopf 68 eine zylindrische Hülse 69 mit einer Rastnase 70 aufweist. Die Rastnase 70 bildet einen in Längsrichtung verlaufenden Fortsatz der Hülse 69 und erstreckt sich zusätzlich radial nach innen. Zur Aufnahme des sich radial nach Innen erstreckenden Teil der Rastnase 70 weist der Hülsenabschnitt 71 eine dazu komplementäre Aussparung 72 auf. Wird nun der Betätigungsknopf 68 entgegen der Pfeilrichtung 8 gezogen, sodass die Rastnase 70 außer Eingriff mit der Aussparung 72 gebracht worden ist, kann der Betätigungsknopf 68 in Pfeilrichtung 4 um die Mittelachse 5 gedreht werden und liegt auf der Stirnseite 73 des Hülsenabschnitts 71 auf. Das Aufsitzen der Rastnase 70 auf der Stirnseite 73 bildet somit die Neutralstellung des Rastbolzen, während eine komplett die Aussparungen 72 in Pfeilrichtung 8 eingefahrene Rastnase die Sperrstellung das Rastbolzens definiert.

Die vorliegende Erfindung ist nicht ausschließlich mit einem geschlossenen Knopf realisierbar, auch sind offene Varianten durchaus möglich, wie es in der Figur 19 dargestellt ist. Auch kann der Betätigungsknopf eine von der hier beschrieben Form abweichende Formgebung aufweisen und beispielsweise als Hebelarm ausgebildet sein.

### Zeichnungslegende,

1. Rastbolzen
2. Verriegelungsende
3. Madenschraube
4. Pfeilrichtung
5. Mittelachse
6. Axialdruckfeder 6`
7. Sprengring
8. Pfeilrichtung
9. Schraube
10. Betätigungsknopf 10`
11. Kopf 11'
12. Hülse 12'
13. Aufnahmeraum 13'
14. Stirnfläche (von 12)
15. Rastnase, 15'
16. Durchführung
17. Montagehülse 17'
18. Schlitz
19. Innenprofil
20. Stellzapfen 20'
21. Auflaufschräge 21'
22. Betätigungsende 22'
23. Sperrzapfen 23`
24. Markierung
25. Ringschulter
26. Führungsabschnitt 26'
27. Ringnut
28. Kragen
29. Gewinde
30. Führungshülse
31. Außengewinde
32. Außensechskant
33. Hülsenabschnitt
34. Führungsbohrung 34`
35. Anschlagsteg
36. Bohrungsabschnitt 36'
37. Innenraum 37'
38. Stirnseite
39. Aussparung 39'
40. Führungshülse
41. Rastnut
42. Außensechskant
43. Hülsenabschnitt
44. Gewindebohrung
45. Steckhülse
46. Montagebereich
47. Anschlagsteg
48. Stirnseite
49. Aussparung
50. Rändelung
51. Verzahnung
52. Ringnut
53. Anschlagsteg
54. Aufnahmehülse
55. Anschlag
57. Montagehülse
58. Rastnase
59. Aussparung
60. Betätigungsknopf
61. Rastnase
62. Hülse
63. Hülsenabschnitt
64. Kulissenführung
65. Kulisse
66. Kulisse
67. Endbereich
68. Betätigungsknopf
69. Hülse
70. Rastnase
71. Hülsenabschnitt
72. Aussparung
73. Stirnseite

## Patentansprüche

1. Federbelasteter Rastbolzen (1, 1') bestehend aus einer Führungshülse (30, 40), die in eine zugeordnete Bohrung in ein Maschinen- oder Möbelteil einschraubbar ist, und einem in der Führungshülse (30, 40) axial verschiebbar gelagerten Stellzapfen (20, 20'), der in mindestens zwei Rastpositionen in der Führungshülse (30, 40) bringbar ist, der aus einer aus der Führungshülse (30, 40) axial vorstehenden Sperrstellung entgegen der Stellkraft einer Axialdruckfeder (6, 6') in eine zurückgezogene, nicht axial aus der Führungshülse (30, 40) vorstehende Neutralstellung verstellbar ist, und der ein spitzenseitiges Verriegelungsende (2) und ein entgegengesetzt angeordnetes Betätigungsende (22, 22') in Verbindung mit einem Betätigungsknopf (10, 10', 10", 10‴, 60, 68) aufweist, wobei der Betätigungsknopf (10, 10') eine äußere Hülse (12, 12', 12", 12‴, 62) aufweist, mit welcher der Betätigungsknopf (10, 10', 10", 10‴, 60) auf einem Hülsenabschnitt (33, 43, 43', 43") der Führungshülse (30, 40) axial verschiebbar gelagert ist, wobei der Betätigungsknopf (10, 10', 10", 10‴) mindestens eine innerseitige Rastnase (15, 15a, 15b, 58, 58', 61, 70) umfasst, die in eine korrespondierende Aussparung (39, 39', 59, 59', 72) in der Seitenwand des Hülsenabschnitts (33, 43) der Führungshülse (30, 40) in der Sperrstellung rastend eingreift und den unter Federkraft eingerückten Betätigungsknopf (10, 10') gegenüber einer axialen Drehung um die Mittelachse (5) des Rastbolzens (1, 1') drehfest fixiert und in der Neutralstellung die drehfeste fixierte Position der Rastnase (15, 15a, 15b, 58, 58', 61, 70) aufgehoben ist und der Betätigungsknopf (10, 10') um die Mittelachse (5) drehbar ist, **dadurch gekennzeichnet, dass** die Führungshülse (40) mindestens zweigeteilt ist und aus einer Steckhülse (45) besteht sowie einer auf der Steckhülse (45) aufgesteckten und drehbaren Aufnahmehülse (54).

2. Rastbolzen (1, 1') nach Anspruch 1, **dadurch gekennzeichnet, dass** die Rastnase (15) am Innenumfang der Hülse (12, 12', 12") angeordnet ist und sich in radialer und axialer Richtung erstreckt.

3. Rastbolzen (1, 1') nach Anspruch 1 oder 2, **dadurch gekennzeichnet, dass** die Rastnase (15) in Neutralstellung, aufgrund der wirkenden Federkraft auf der Stirnseite (38) des Hülsenabschnitts (33, 43) aufsitzt und in die mindestens zwei Rastpositionen der Führungshülse (30, 40) bringbar ist.

4. Rastbolzen (1, 1') nach einem der Ansprüche 1 bis 3, **dadurch gekennzeichnet, dass** die Stirnseite (38, 73) mindestens eine Rastnut (41) zur Aufnahme der Rastnase (15) aufweist.

5. Rastbolzen (1, 1') nach einem der Ansprüche 1 bis 4, **dadurch gekennzeichnet, dass** der Stellzapfen (20, 20') am Verriegelungsende einen Sperrzapfen (23) aufweist, an dessen Ende sich eine Auflaufschräge (21, 21') befindet sowie einen an den Sperrzapfen (23, 23') in Richtung des Betätigungsendes (22, 22') anschließenden und im Durchmesser radial verringerten Führungsabschnitt (26), der zumindest abschnittsweise von der Axialdruckfeder (6) umgeben ist und in das Betätigungsende (22, 22') mündet, welches mit dem Betätigungsknopf (10, 10') axial feststehend in Eingriff bringbar ist.

6. Rastbolzen (1, 1') nach einem der Ansprüche 1 bis 5, **dadurch gekennzeichnet, dass** die Führungshülse (30, 40) eine axiale Führungsbohrung (34, 34') aufweist, durch die der Stellzapfen (20, 20') geführt ist und die in Richtung des Verriegelungsende (2) offen ist und in Richtung des Betätigungsende (22) einen Bohrungsabschnitt (36, 36') aufweist, der die Führungsbohrung (34, 34') radial verengt, und dass sich die Führungsbohrung (34, 34') oberhalb des Bohrungsabschnitts (36, 36') wieder radial vergrößert und einen Innenraum (37, 37') innerhalb des Hülsenabschnitts (33, 43) bildet, der in Richtung des Betätigungsendes (22) offen ist.

7. Rastbolzen (1, 1') nach einem der Ansprüche 1 bis 6, **dadurch gekennzeichnet, dass** der Betätigungsknopf (10, 10') in radialem Abstand zur äußeren Hülse (12, 12', 12‴) eine innenliegende, sich in axialer Richtung erstreckende, Montagehülse (17, 17" 57) aufweist, in der das Betätigungsende (22) mindestens teilweise aufgenommen ist.

8. Rastbolzen (1) nach einem der Ansprüche 1 bis 7, **dadurch gekennzeichnet, dass** die Montagehülse (17) an eine durch den Kopf (11) des Betätigungsknopfes (10) verlaufende Durchführung (16) anschließt, durch die eine Schraube (9) geführt ist, die in ein in Längsrichtung des Betätigungsendes (22) verlaufendes Gewinde (29) zur axialen Verstellung des federvorgespannten Stellzapfens (20) eingreift.

9. Rastbolzen (1) nach einem der Ansprüche 1 bis 8, **dadurch gekennzeichnet, dass** die Montagehülse (17) ein zu dem Außenprofil des Betätigungsendes (22) korrespondierendes Innenprofil (19) aufweist.

10. Rastbolzen (1) nach einem der Ansprüche 7 bis 9, **dadurch gekennzeichnet, dass** die Seitenwand der Montagehülse (17) in Axialrichtung verlaufende Schlitze (18) aufweist.

11. Rastbolzen (1') nach einem der Ansprüche 1 bis 10, **dadurch gekennzeichnet, dass** die Steckhülse (45) eine Ringnut (52) aufweist, in die eine von der Aufnahmehülse (54) nach innen ragende Madenschraube (3) eingreift und die beiden Hülsen (45, 54) gegeneinander lagesichert.

12. Rastbolzen (1') nach einem der Ansprüche 1 bis 11, **dadurch gekennzeichnet, dass** das Befestigungsende (22') des Stellzapfens (20') eine Profilierung (50) zur drehfesten und kraftschlüssigen Verbindung mit dem Betätigungsknopf (10'), aufweist.

13. Rastbolzen (1, 1') nach einem der Ansprüche 1 bis 12, **dadurch gekennzeichnet, dass** die Axialdruckfeder (6, 6') zwischen einer gegenüber dem Führungsabschnitt (26, 26') radial vergrößerten Ringschulter (25) des Stellzapfens (20, 20') und einem Anschlagsteg (35, 55) zwischen dem Bohrungsabschnitt (36, 36') und Führungsbohrung (34, 34') der Führungshülse (30, 40) eingespannt ist.

14. Rastbolzen (1) nach einem der Ansprüche 1 bis 13, **dadurch gekennzeichnet, dass** der gegenüber der Führungsbohrung (34) radial verringerte Bohrungsabschnitt (36) einen Anschlagsteg in Richtung des Betätigungsendes (22, 22') bildet, auf dem ein in einer Ringnut (27) des Führungsabschnitts (26) mindestens teilweise eingebrachter Sprengring (7), bei Entkopplung des Gewindes (29) von der Schraube (9) und axialer Bewegung des Stellzapfens (22), aufliegt.

## Claims

1. Spring-loaded locking bolt (1, 1') consisting of a guide sleeve (30, 40) which can be screwed into an assigned bore in a machine part or furniture part and an adjusting pin (20, 20') mounted in the guide sleeve (30, 40) to be axially displaceable and which can be brought into at least two locking positions in the guide sleeve (30, 40) which can be moved from a blocking position projecting axially from the guide sleeve (30, 40) counter to the adjusting force of an axial compression spring (6, 6') into a retracted neutral position not projecting axially from the guide sleeve (30, 40), and which has a tip-side locking end (2) and an oppositely arranged actuating end (22, 22') in connection with an actuating button (10, 10', 10", 10‴, 60, 68), wherein the actuating button (10, 10') has an outer sleeve (12, 12', 12", 12‴, 62) with which the actuating button (10, 10', 10", 10‴, 60) is mounted to be axially displaceable on a sleeve section (33, 43, 43', 43") of the guide sleeve (30, 40), wherein the actuating button (10, 10', 10", 10‴) comprises at least one inner-side locking projection (15, 15a, 15b, 58, 58', 61, 70) which engages in locking manner in a corresponding recess (39, 39', 59, 59', 72) in the side wall of the sleeve section (33, 43) of the guide sleeve (30, 40) in the blocking position and fixes the actuating button (10, 10') inserted under spring force to be resistant to rotation with respect to axial rotation about the centre axis (5) of the locking bolt (1, 1') and in the neutral position, the rotation-resistant fixed position of the locking projection (15, 15a, 15b, 58, 58', 61, 70) is cancelled and the actuating button (10, 10') can be rotated about the centre axis (5), **characterised in that** the guide sleeve (40) is divided into at least two and consists of a plug-in sleeve (45) and a rotatable receiving sleeve (54) placed on the plug-in sleeve (45).

2. Locking bolt (1, 1') according to claim 1, **characterised in that** the locking projection (15) is arranged on the inner circumference of the sleeve (12, 12', 12") and extends in radial and axial direction.

3. Locking bolt (1, 1') according to claim 1 or 2, **characterised in that** the locking projection (15) in neutral position sits on the end-face side (38) of the sleeve section (33, 43) due to the acting spring force and can be brought into the at least two locking positions of the guide sleeve (30, 40).

4. Locking bolt (1, 1') according to one of claims 1 to 3, **characterised in that** the end-face side (38, 73) has at least one locking groove (41) to receive the locking projection (15).

5. Locking bolt (1, 1') according to one of claims 1 to 4, **characterised in that** the adjusting pin (20, 20') at the locking end has a blocking pin (23), at the end of which a run-on slope (21, 21') is located and a guide section (26) following the blocking pin (23, 23') in the direction of the actuating end (22, 22') and with radially reduced diameter is surrounded at least in sections by the axial compression spring (6) and leads into the actuating end (22, 22') which can engage with the actuating button (10, 10') to be axially fixed.

6. Locking bolt (1, 1') according to one of claims 1 to 5, **characterised in that** the guide sleeve (30, 40) has an axial guide bore (34, 34'), through which the adjusting pin (20, 20') is guided and which is open in the direction of the locking end (2) and in the direction of the actuating end (22) has a bore section (36, 36') which radially narrows the guide bore (34, 34'), and **in that** the guide bore (34, 34') is radially increased again above the bore section (36, 36') and forms an inner space (37, 37') within the sleeve section (33, 43) which is open in the direction of the actuating end (22).

7. Locking bolt (1, 1') according to one of claims 1 to 6, **characterised in that** the actuating button (10, 10') has at radial distance from the outer sleeve (12, 12', 12‴), an inner-lying mounting sleeve (17, 17", 57) extending in axial direction in which the actuating end (22) is at least partly received.

8. Locking bolt (1) according to one of claims 1 to 7, **characterised in that** the mounting sleeve (17) connects to a feed-through (16) running through the head (11) of the actuating button (10) and through which a screw (9) is guided which engages in a thread (29) running in the longitudinal direction of the actuating end (22) for axial movement of the spring-pretensioned adjusting pin (20).

9. Locking bolt (1) according to one of claims 1 to 8, **characterised in that** the mounting sleeve (17) has an inner profile (19) corresponding to the outer profile of the actuating end (22).

10. Locking bolt (1) according to one of claims 7 to 9, **characterised in that** the side wall of the mounting sleeve (17) has slots (18) running in axial direction.

11. Locking bolt (1') according to one of claims 1 to 10, **characterised in that** the plug-in sleeve (45) has an annular groove (52) into which a grub screw (3) projecting inwardly from the receiving sleeve (54) engages and secures the two sleeves (45, 54) in position with respect to one another.

12. Locking bolt (1') according to one of claims 1 to 11, **characterised in that** the attachment end (22') of the adjusting pin (20') has profiling (50) for rotation-resistant and frictional connection with the actuating button (10').

13. Locking bolt (1, 1') according to one of claims 1 to 12, **characterised in that** the axial compression spring (6, 6') is clamped between an annular shoulder (25) of the adjusting pin (20, 20') radially increased with respect to the guide section (26, 26') and a stop bar (35, 55) between the bore section (36, 36') and guide bore (34, 34') of the guide sleeve (30, 40).

14. Locking bolt (1) according to one of claims 1 to 13, **characterised in that** the bore section (36) radially reduced with respect to the guide bore (34) forms a stop bar in the direction of the actuating end (22, 22'), on which rests a circlip (7) introduced at least partly in an annular groove (27) of the guide section (26) when the thread (29) is decoupled from the screw (9) and the adjusting pin (22) is moved axially.

## Revendications

1. Boulon d'encliquetage sollicité par ressort (1, 1') constitué d'une douille de guidage (30, 40) qui peut être vissée dans un perçage associé dans une partie de machine ou de meuble et d'un tenon de réglage (20, 20') monté dans la douille de guidage (30, 40) de manière à pouvoir être coulissé axialement, qui peut être amené dans au moins deux positions d'encliquetage dans la douille de guidage (30, 40), qui peut être ajusté depuis une position de blocage dépassant axialement de la douille de guidage (30, 40) à l'encontre de la force de réglage d'un ressort de pression axial (6, 6') dans une position neutre en retrait ne dépassant pas axialement de la douille de guidage (30, 40), et qui présente une extrémité de verrouillage côté pointe (2) et une extrémité d'actionnement (22, 22') disposée à l'opposé en liaison avec un bouton d'actionnement (10, 10', 10", 10‴, 60, 68), dans lequel le bouton d'actionnement (10, 10') présente une douille extérieure (12, 12', 12", 12‴, 62) avec laquelle le bouton d'actionnement (10, 10', 10", 10‴, 60) est monté sur une section de douille (33, 43, 43', 43") de la douille de guidage (30, 40) de manière à pouvoir être coulissé axialement, dans lequel le bouton d'actionnement (10, 10', 10", 10‴) comprend au moins un ergot d'encliquetage intérieur (15, 15a, 15b, 58, 58', 61, 70) qui vient en prise par encliquetage avec un évidement correspondant (39, 39', 59, 59', 72) dans la paroi latérale de la section de douille (33, 43) de la douille de guidage (30, 40) dans la position de blocage et bloque de manière solidaire en rotation le bouton d'actionnement (10, 10') renfoncé sous l'effet de la force de ressort par rapport à une rotation axiale autour de l'axe central (5) du boulon d'encliquetage (1,1') et la position bloquée de manière solidaire en rotation de l'ergot d'encliquetage (15, 15a, 15b, 58, 58', 61, 70) est supprimée dans la position neutre et le bouton d'actionnement (10, 10') peut être pivoté autour de l'axe central (5), **caractérisé en ce que** la douille de guidage (40) est au moins divisée en deux parties et est constituée d'une douille enfichable (45) ainsi que d'une douille de réception (54) emboîtée sur la douille enfichable (45) et pouvant pivoter.

2. Boulon d'encliquetage (1, 1') selon la revendication 1, **caractérisé en ce que** l'ergot d'encliquetage (15) est disposé sur la périphérie intérieure de la douille (12, 12', 12") et s'étend dans la direction radiale et dans la direction axiale.

3. Boulon d'encliquetage (1, 1') selon la revendication 1 ou 2, **caractérisé en ce que** l'ergot d'encliquetage (15) repose en position neutre, en raison de la force de ressort agissant sur la face frontale (38) de la section de douille (33, 43) et peut être amené dans les au moins deux positions d'arrêt de la douille de guidage (30, 40).

4. Boulon d'encliquetage (1, 1') selon l'une des revendications 1 à 3, **caractérisé en ce que** la face frontale (38, 73) présente au moins une rainure d'encliquetage (41) pour recevoir l'ergot d'encliquetage (15).

5. Boulon d'encliquetage (1, 1') selon l'une des revendications 1 à 4, **caractérisé en ce que** le tenon de réglage (20, 20') présente sur l'extrémité de verrouillage un tenon de blocage (23) sur l'extrémité duquel se trouve un chanfrein de butée (21, 21'), ainsi qu'une section de guidage (26) se raccordant au tenon de blocage (23, 23') en direction de l'extrémité d'actionnement (22, 22') et présentant un diamètre réduit radialement, qui est entourée au moins par endroits par le ressort de pression axial (6) et débouche dans l'extrémité d'actionnement (22, 22'), laquelle peut être amenée en prise de manière immobile axialement avec le bouton d'actionnement (10, 10').

6. Boulon d'encliquetage (1, 1') selon l'une des revendications 1 à 5, **caractérisé en ce que** la douille de guidage (30,40) présente un perçage de guidage axial (34, 34') à travers lequel le tenon de réglage (20, 20') est guidé et qui est ouvert en direction de l'extrémité de verrouillage (2) et présente en direction de l'extrémité d'actionnement (22) une section de perçage (36, 36') qui rétrécit radialement le perçage de guidage (34, 34'), et que le perçage de guidage (34, 34') s'agrandit à nouveau radialement au-dessus de la section de guidage (36, 36') et forme un espace intérieur (37, 37') à l'intérieur de la section de douille (33, 43) qui est ouvert en direction de l'extrémité d'actionnement (22).

7. Boulon d'encliquetage (1, 1') selon l'une des revendications 1 à 6, **caractérisé en ce que** le bouton d'actionnement (10, 10') présente, à distance radiale de la douille extérieure (12, 12', 12‴), une douille de montage (17, 17", 57) s'étendant dans la direction axiale et se trouvant à l'intérieur, dans laquelle l'extrémité d'actionnement (22) est au moins en partie logée.

8. Boulon d'encliquetage (1) selon l'une des revendications 1 à 7, **caractérisé en ce que** la douille de montage (17) se raccorde à un passage (16) s'étendant à travers la tête (11) du bouton d'actionnement (10), à travers lequel est guidée une vis (9) qui vient en prise avec un filetage (29) s'étendant dans la direction longitudinale de l'extrémité d'actionnement (22) pour l'ajustement axial du tenon de réglage (20) précontraint par ressort.

9. Boulon d'encliquetage (1) selon l'une des revendications 1 à 8, **caractérisé en ce que** la douille de montage (17) présente un profil intérieur (19) correspondant au profil extérieur de l'extrémité d'actionnement (22).

10. Boulon d'encliquetage (1) selon l'une des revendications 7 à 9, **caractérisé en ce que** la paroi latérale de la douille de montage (17) présente des entailles (18) s'étendant dans la direction axiale.

11. Boulon d'encliquetage (1') selon l'une des revendications 1 à 10, **caractérisé en ce que** la douille enfichable (45) présente une rainure annulaire (52) avec laquelle une vis sans tête (3) dépassant vers l'intérieur de la douille de réception (54) vient en prise et bloque en position les deux douilles (45, 54) l'une contre l'autre.

12. Boulon d'encliquetage (1') selon l'une des revendications 1 à 11, **caractérisé en ce que** l'extrémité de fixation (22') du tenon de réglage (20') présente un profilage (50) destiné à être relié de manière solidaire en rotation et à force au bouton d'actionnement (10').

13. Boulon d'encliquetage (1, 1') selon l'une des revendications 1 à 12, **caractérisé en ce que** le ressort de pression axial (6, 6') est serré entre un épaulement annulaire (25) du tenon de réglage (20, 20') agrandi radialement par rapport à la section de guidage (26, 26') et une nervure de butée (35, 55) entre la section de perçage (36, 36') et le perçage de guidage (34, 34') de la douille de guidage (30, 40).

14. Boulon d'encliquetage (1) selon l'une des revendications 1 à 13, **caractérisé en ce que** la section de perçage (36) réduite radialement par rapport au perçage de guidage (34) forme une nervure de butée en direction de l'extrémité d'actionnement (22, 22') sur laquelle repose un jonc d'arrêt (7) inséré au moins en partie dans une rainure annulaire (27) de la section de guidage (26) lors du découplage du filetage (29) de la vis (9) et du mouvement axial du pivot de réglage (22).
